(19) Europäisches Patentamt

European Patent Office

Office européen des brevets

(11) Veröffentlichungsnummer: **0 278 204 B1**

# (12) EUROPÄISCHE PATENTSCHRIFT

(45) Veröffentlichungstag der Patentschrift: **15.05.91**

(51) Int. Cl.⁵: **A01L 7/02**

(21) Anmeldenummer: **87810076.7**

(22) Anmeldetag: **06.02.87**

(54) **Hufeisenunterlage für die Verhinderung des Anfrierens von Schnee- und Eisklumpen an der Sohle von Pferdehufen.**

(43) Veröffentlichungstag der Anmeldung:
**17.08.88 Patentblatt  88/33**

(45) Bekanntmachung des Hinweises auf die
Patenterteilung:
**15.05.91 Patentblatt  91/20**

(84) Benannte Vertragsstaaten:
**AT CH DE LI**

(56) Entgegenhaltungen:
**DE-A- 2 402 321**
**DE-A- 3 430 358**
**FR-A- 2 294 637**
**GB-A- 238 330**

(73) Patentinhaber: **Aegerter, Walter**
**Stockhornweg 3**
**CH-3138 Uetendorf/BE(CH)**

(72) Erfinder: **Aegerter, Walter**
**Stockhornweg 3**
**CH-3138 Uetendorf/BE(CH)**

(74) Vertreter: **Fischer, Franz Josef et al**
**c/o Bovard AG Optingenstrasse 16**
**CH-3000 Bern 25(CH)**

EP 0 278 204 B1

## Beschreibung

Die vorliegende Erfindung bezieht sich auf eine Hufeisenunterlage für Pferde, welche im Winter eingesetzt werden. Der Zweck besteht darin, dass die Schnee- und Eisklumpenbildung am beschlagenen Huf weitgehend verhindert wird.

In den CH-A-556 I34, CH-A-575 706 und CH-A-584 504 sind Vorrichtungen zur Verhinderung der Bildung von Schnee- und Eisklumpen an der Hufsohle beschrieben. Diese bekannten Vorrichtungen bestehen insbesondere aus kautschukartigem Material, das an der Innenseite des Hufeisens schlauchförmig ausgebildet ist. Die Hufeiseneinlage wird entweder durch einen Spannring oder aber durch einen tangential verlaufenden flanschartigen Befestigungslappen am Hufeisen angebracht. Die letztgenannte Ausführungsform mit dem flanschartigen Befestigungslappen hat sich in der Praxis am stärksten durchgesetzt. Dabei hat es sich als zweckmässig erwiesen, dass die Hufeiseneinlage mittels einer Aluminiumniete vor dem Beschlagen am Hufeisen befestigt wird. Dadurch kann die Bildung eines Eis- bzw. Schneebelages an der Hufsohle und somit die Gleit- und Sturzgefahr weitgehend vermindert werden.

Das Annieten von Hufeiseneinlagen mittels Aluminiumnieten hat jedoch den Nachtteil, dass gewisse Pferde auf Aluminium empfindlich sind.

Im übrigen ist die Dauerhaftigkeit der bekannten Hufeisenunterlagen beschränkt.

Es ist somit Aufgabe der vorliegenden Erfindung eine Hufeisenunterlage zur Verfügung zu stellen, welche beim Reiten und Fahren auf schneebedeckter Unterlage das Anfrieren von Schnee- und Eisklumpen am Huf weitgehend verhindert und die ohne Aluminiumnieten beim Beschlagen leicht angebracht werden kann und welche im Gegensatz zu den marktüblichen Hufeiseneinlagen eine verlängerte Verwendungsfähigkeit aufweist.

Diese Aufgabe wurde durch die erfindungsgemässe Hufeisenunterlage gelöst.

Gegenstand der vorliegenden Erfindung ist die im Patentanspruch definierte Hufeisenunterlage.

Als Material für erfindungsgemässe Hufeisenunterlagen eignet sich insbesondere Polycarbonat (z.B. "Makrolon" von Bayer). Dieser Kunststoff weist ideale mechanische Eigenschaften als Werkstoff für die erfindungsgemässen Hufeisenunterlagen auf. Er kann beispielsweise durch Spritzgiessen verarbeitet werden. Es kommen jedoch auch andere Kunststoffe mit verbesserten mechanischen bzw. thermischen Eigenschaften in Frage, nämlich sogenannte Konstruktionskunststoffe. Typische Vertreter sind Polyacetate, Polyamide, ABS, Polysulfone, Polyimide und Polyphenylensulfid.

Die im wesentlichen halbkreisförmigen Lappen, welche nach dem Beschlag eines Pferdes unter Verwendung einer erfindungsgemässen Hufeisenunterlage auf der Innenseite des Hufeisens hervorstehen, besitzen eine elastische Wirkung und werden beim Bodenkontakt des Hufes auf einer schneebedeckten Oberfläche nach innen gedrückt. Beim Heben des Hufes nehmen diese Lappen wiederum die ursprüngliche Form an, wobei der anhaftende Schnee vom Huf gelöst wird.

Die Hufeisenunterlagen werden zweckmässig entsprechend der Grössen der Hufeisen hergestellt.

Neben der verlängerten Lebensdauer besitzen die erfindungsgemässen Hufeisenunterlagen gegenüber den bekannten Hufeiseneinlagen den Vorteil, dass sie einfacher sind und demzufolge wirtschaftlicher herzustellen sind.

Im folgenden wird die Erfindung anhand von lediglich einen Ausführungsweg darstellenden Zeichnungen näher erläutert. Es zeigt:

**Figur 1**     eine Darstellung der Hufeisenunterlage

**Figur 2**     zeigt die Unteransicht eines beschlagenen Pferdehufes mit der erfindungsgemässen Hufeisenunterlage

**Figur 3**     und

**Figur 4**     zeigen einen Teilquerschnitt längs der Linie III-III in Figur 2.

Figur I zeigt die, aus einer I,5 mm dicken Kunststoffplatte aus dem Polycarbonat "Makrolon" von Bayer bestehende Hufeisenunterlage I. Es sind die im wesentlichen halbkreisförmigen Lappen 2 an der Innenseite dargestellt. An den Stellen, wo die Lappen in spitzem Winkel zusammenstossen, befindet sich ein Loch 3, welches dazu dient, dass bei der Beanspruchung der Hufeisenunterlage am Tier der Kunststoff nicht reisst.

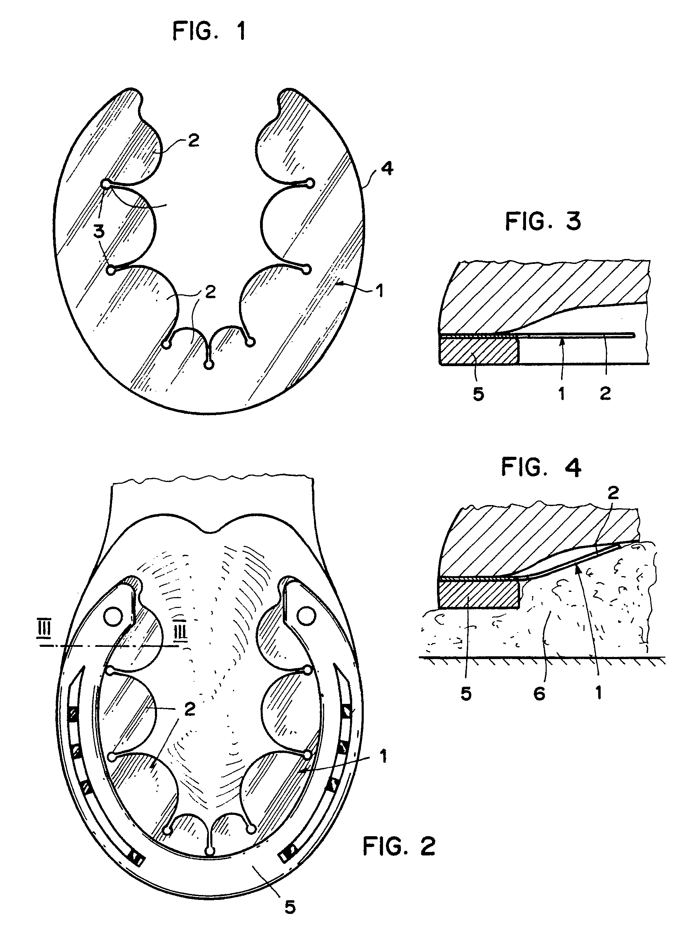

In Figur 2 ist die montierte Hufeisenunterlage von der Unterseite her dargestellt. Hier ist ersichtlich, dass die Aussenkante des Hufeisens und die Aussenkante der Hufeisenunterlage 4 bündig sind. Es ist ebenfalls dargestellt, dass die I,5 mm dicke Kunststoffunterlage so ausgestaltet ist, dass bei den nach der Innenseite ragenden Lappen 2 der Abstand des vom Hufeisen am weitesten entfernten Punkt vom Hufeisen ungefähr der Hufeisenbreite entspricht. Die Hufeisenunterlage kann ohne weitere Befestigung am Hufeisen direkt vom Hufschmied aufgebracht werden.

In Figur 3 ist der Teilquerschnitt entlang der Linie III-III auf Figur 2 dargestellt, wobei der Lappen 2 in der normalen Länge vorliegt.

In Figur 4 ist der gleiche Querschnitt, wie in Figur 3 dargestellt, der Lappen 2 wird jedoch durch die Unterlage aus Schnee 6 nach oben gedrückt. Nach der Entlastung nimmt der Lappen dank seiner elastischen Eigenschaften wiederum die ursprüngliche Form an und stösst gegebenenfalls haftendes Material 6 wiederum weg.

## Ansprüche

1. Hufeisenunterlage zur Vermeidung des Anfrierens von Schnee- und Eisklumpen an der Sohle von Pferdehufen, dadurch gekennzeichnet, dass die Unterlage (1) aus einer flexiblen Kunstoffplatte besteht, die im wesentlichen die Form des Hufeisens aufweist, wobei an der Innenseite der hufeisenförmigen Unterlage mehrere, im wesentlichen halbkreisförmige Lappen (2) vorhanden sind, die über das Hufeisen herausragen.

2. Hufeisenunterlage nach Anspruch 1, dadurch gekennzeichnet, dass der Kunststoff in einem Temperaturbereich zwischen -100 bis +140°C widerstandsfähig gegen Schlag- und Stossbeanspruchung ist.

3. Hufeisenunterlage nach Anspruch 1 oder 2, dadurch gekennzeichnet, dass sie aus Polycarbonat besteht.

4. Hufeisenunterlage nach einem der Ansprüche 1 bis 3, dadurch gekennzeichnet, dass sie eine Dicke von 0,8 bis 2,5 mm und insbesondere 1,5 mm aufweist.

5. Hufeisenunterlage nach einem der Ansprüche 1 bis 4, dadurch gekennzeichnet, dass 5 bis 8 halbkreisförmige Lappen (2) vorhanden sind.

6. Hufeisenunterlage nach einem der Ansprüche 1 bis 5, dadurch gekennzeichnet, dass der äusserste Punkt der Lappen (2) einen solchen Abstand vom Hufeisen (5) aufweist, dass er ungefähr dem Durchmesser des Hufeisens entspricht.

7. Hufeisenunterlage nach einem der Ansprüche 1 bis 6, dadurch gekennzeichnet, dass sie an Stellen, wo die Grenzlinien in spitzem Winkel verlaufen, die Linien in einem kreisrunden Loch (3) enden, womit das Einreissen der Hufeisenunterlage verhindert wird.

## Claims

1. A horseshoe underlayer to prevent lumps of snow and ice from freezing on the sole of horses' hoofs, characterized in that the underlayer (1) consists of a flexible plastic sheet having essentially the shape of the horseshoe, there being several essentially semicircular lobes (2) present on the inside of the horseshoe-shaped underlayer, which project beyond the horseshoe.

2. A horseshoe underlayer according to claim 1, characterized in that the plastic is resistant to impact and shock stress in a range of temperature between -100 to +140°C.

3. A horseshoe underlayer according to claim 1 or 2, characterized in that it is made of polycarbonate.

4. A horseshoe underlayer according to one of claims 1 to 3, characterized in that it has a thickness of 0.8 to 2.5 mm and, in particular, 1.5mm.

5. A horseshoe underlayer according to one of claims 1 to 4, characterized in that there are 5 to 8 semicircular-shaped lobes (2).

6. A horseshoe underlayer according to one of claims 1 to 5, characterized in that the outermost point of the lobes (2) is at such a distance from the horseshoe (5) that it corresponds approximately with the diameter of the horseshoe.

7. A horseshoe underlayer according to one of claims 1 to 6, characterized in that at points where the boundary lines run at an acute angle, the lines end in a circular hole (3), thereby preventing tearing of the horseshoe underlayer.

## Revendications

1. Semelle pour fer à cheval pour empêcher la formation d'amas de neige et de glace sur le sabot d'un cheval, caractérisée en ce que la semelle (1) consiste en une plaque flexible de matière synthétique qui présente essentiellement la forme d'un fer à cheval, plusieurs pattes (2) en forme générale de demi-cercle, se présentant du côté intérieur de la forme de fer à cheval de la semelle, ces pattes dépassant le fer à cheval.

2. Semelle pour fer à cheval selon la revendication 1, caractérisée en ce que la matière synthétique est apte à résister aux coups et cahots dans un domaine de température allant de -100°C à +140°C.

3. Semelle pour fer à cheval selon la revendication 1 ou 2, caractérisée en ce qu'elle consiste en polycarbonate.

4. Semelle pour fer à cheval selon l'une des revendications 1 à 3, caractérisée en ce qu'elle présente une épaisseur de 0,8 à 2,5 mm, de préférence 1,5 mm.

5. Semelle pour fer à cheval selon l'une des revendications 1 à 4, caractérisée en ce qu'elle comprend 5 à 8 pattes en forme de demi-cercle (2).

6. Semelle pour fer à cheval selon l'une des revendications 1 à 5, caractérisée en ce que le point extrême des pattes (2) présente une distance du fer à cheval (5) telle qu'elle correspond approximativement à la largeur du fer à cheval.

7. Semelle pour fer à cheval selon l'une des revendications 1 à 6, caractérisée en ce que, aux endroits où le contour évolue en un angle aignu, la ligne de contour aboutit en un trou rond (3) de façon à empêcher la déchirure de la semelle pour fer à cheval.

FIG. 1

FIG. 3

FIG. 4

FIG. 2